# FASCICULE DE BREVET EUROPEEN

(11) **EP 2 438 274 B1**
(45) Date de publication et mention de la délivrance du brevet: **26.11.2014**
(21) Numéro de dépôt: 10724776.9
(22) Date de dépôt: 04.06.2010
(51) Int. Cl.: F01D 21/00, F02C 7/236, F02C 9/46, F02C 7/32

(54) **DISPOSITIF ET PROCEDE DE DETECTION D'UNE DEFAILLANCE D'UNE POMPE A CARBURANT BASSE PRESSION D'UN TURBOREACTEUR ET TURBOREACTEUR AVEC LEDIT DISPOSITIF**
FEHLERDETEKTIONVORRICHTUNG UND METHODE EINER NIEDRIGDRUCKKRAFTSTOFFPUMPE IN EINEM TURBO
FAILURE DETECTION SYSTEM AND METHOD FOR A LOW PRESSURE FUEL PUMP IN A TURBOJET ENGINE AND TURBOJET ENGINE WITH THE SAME

(30) Priorité: 05.06.2009 FR 0953736
(43) Date de publication de la demande: 11.04.2012
(73) Titulaire: Snecma, 75015 Paris (FR)
(72) Inventeur: BENITAH, Jonathan, F-94300 Vincennes (FR)
(74) Mandataire: Gevers France
(86) Numéro de dépôt international: PCT/EP2010/057857
(87) Numéro de publication internationale: WO 2010/139798

(56) Documents cités:
- EP-A1- 1 367 226
- EP-A2- 0 889 315
- FR-A1- 2 923 871

## Description

L'invention concerne un dispositif et un procédé de détection d'une défaillance d'une pompe à carburant basse pression d'un turboréacteur.

Un turboréacteur comprend généralement une soufflante, un ou plusieurs étages de compresseurs, par exemple un compresseur basse pression et un compresseur haute pression, une chambre de combustion, un ou plusieurs étages de turbine, par exemple une turbine haute pression et une turbine basse pression, et une tuyère d'éjection. Dans la chambre de combustion, du carburant comprimé est injecté et brûlé avec l'air comprimé en provenance des compresseurs. Chaque compresseur est solidaire en rotation d'une turbine à laquelle il est relié par un arbre, formant ainsi un corps haute pression et un corps basse pression.

La chambre de combustion est alimentée en carburant par un circuit de carburant dans lequel le carburant est entraîné par des pompes à carburant, généralement une pompe basse pression et une pompe haute pression.

Les notions de basse et haute pression des pompes à carburant sont totalement décorrélées des notions de basse et haute pression des corps du turboréacteur, s'agissant de la pression de fluides différents; par convention et pour simplifier la description, on utilisera, dans la suite de la description, l'acronyme "HP" pour "haute pression" et l'acronyme "BP" pour "basse pression", à la fois pour les corps du turboréacteur ou leurs éléments que pour les pompes à carburant.

La pompe HP est placée en aval de la pompe BP dans le circuit de carburant. La pompe HP reçoit ainsi, en provenance de la pompe BP, du carburant comprimé une première fois et présentant ainsi une pression suffisante pour se trouver, après compression par la pompe HP, à une pression suffisante pour sa combustion avec l'air comprimé; ainsi, la pompe BP a pour fonction d'alimenter la pompe HP en carburant ayant subi une première compression.

Les pompes BP et HP sont traditionnellement des pompes mécaniques qui peuvent par exemple être "à engrenage" ou à rouet. Une pompe à engrenage comporte notamment un pignon (ou roue) menant(e) (monté rotatif sur un arbre entraîné en rotation par un engrenage) et un pignon (ou roue) mené(e), le carburant étant comprimé dans un volume entre les dents des pignons menant et mené. Une pompe à rouet comporte une roue (ou rouet) munie d'aubes de compression du carburant et montée rotative sur un arbre entraîné en rotation par un engrenage, le carburant étant comprimé par effet centrifuge lors de la rotation de la roue. Classiquement, la pompe BP est une pompe à rouet et la pompe HP est une pompe à engrenage.

Les engrenages d'entraînement des pompes BP et HP sont généralement entraînés indirectement par l'arbre du corps HP du turboréacteur par l'intermédiaire d'un arbre de prise de mouvement connecté à un boîtier de relais d'accessoires qui relie l'arbre de prise de mouvement aux pompes par un engrenage. Le boîtier de relais d'accessoires est bien connu de l'homme du métier sous sa dénomination anglaise "Accessory Gear Box" (AGB). Il s'agit d'un boîtier contenant un engrenage (c'est-à-dire un mécanisme de roues dentées ou pignons qui s'engrènent pour transmettre un mouvement de rotation d'un arbre à un ou plusieurs autres arbres); cet engrenage est relié à un certain nombre d'équipements ou accessoires, comme par exemple un générateur électrique, un starter, un alternateur, des pompes hydrauliques, etc. et, comme on vient de le voir, les pompes BP et HP; l'engrenage transmet aux accessoires les mouvements prélevés sur l'arbre du corps HP du turboréacteur, pour les entraîner.

Une défaillance de la pompe BP (par exemple due à l'ingestion d'un corps étranger venant se bloquer entre les aubes de la roue de la pompe BP et le carter qui les enveloppe) se traduit généralement par la rupture d'une portion fusible de l'arbre entraînant la roue de la pompe BP, le carburant passant alors directement au-travers de la roue sans être comprimé (la roue de la pompe BP étant en effet en roue libre); on parle du "mode de défaillance principal" de la pompe. Dans ce cas, la pompe HP est alimentée par un carburant non comprimé et donc à une pression inférieure à la pression qu'il aurait eu en fonctionnement normal, ce qui peut entraîner une "cavitation" de la pompe HP, à savoir l'aspiration par cette dernière d'air mélangé à du carburant; une telle cavitation de la pompe HP est très néfaste à son fonctionnement et peut entraîner sur elle de fortes détériorations mécaniques pouvant aller jusqu'à une rupture des engrenages l'entraînant en rotation. En cas de rupture, le carburant n'étant plus entraîné dans le circuit de carburant, la chambre de combustion n'est plus alimentée en carburant et le moteur s'arrête, avec les conséquences désastreuses que peut avoir un tel arrêt d'un turboréacteur en plein vol de l'aéroplane qu'il propulse.

Une défaillance de la pompe BP n'est pas détectée en tant que telle, ce sont ses conséquences qui sont détectées, à savoir l'arrêt du turboréacteur. Il existe donc un réel danger dans le fait qu'une défaillance de la pompe BP n'est pas détectable auparavant car, la pompe HP continuant à être alimentée, le risque est grand que le fonctionnement anormal se poursuive jusqu'à entraîner une détérioration de la pompe HP et un arrêt du turboréacteur.

L'invention vise à proposer un dispositif et un procédé de détection qui permettent de déceler efficacement et simplement une défaillance de la pompe BP pour anticiper un risque de détériorations importantes de la pompe HP.

C'est ainsi que l'invention concerne un turboréacteur présentant les caractéristiques de la revendication 1

On connaît le document FR 2 923 871 qui porte sur un dispositif de détection d'une défaillance d'une pompe à carburant haute pression d'un turboréacteur. Cependant ce dispositif ne prévoit pas de contrôle en amont de la pompe basse pression.

Grâce à l'invention, il est possible de détecter très simplement une éventuelle défaillance de la pompe; en effet, il suffit de détecter la présence ou l'absence d'une contribution fréquentielle de la pompe dans les fréquences de vibration du boîtier du relais d'accessoires pour en déduire si la pompe fonctionne normalement ou pas. La détection d'une éventuelle défaillance peut donc se faire très vite, dès sa survenance; il est ainsi possible de prendre rapidement toute mesure appropriée dès le début du dysfonctionnement de la pompe BP. On peut en particulier détecter la fréquence de vibration principale de la pompe et/ou ses harmoniques.

Selon une forme de réalisation préférée, le turboréacteur étant un turboréacteur dit à double corps comportant un corps basse pression et un corps haute pression, ledit arbre rotatif est l'arbre du corps haute pression du turboréacteur.

De préférence, les moyens de mesure de fréquences de vibration du boîtier de relais d'accessoires comprennent un accéléromètre délivrant un signal représentatif des vibrations du boîtier de relais d'accessoires. Avantageusement, on peut utiliser l'accéléromètre qui est, de manière classique dans un turboréacteur, monté sur le boîtier de relais d'accessoires pour surveiller le comportement des roulements de l'engrenage de ce boîtier ainsi que divers autres paramètres; dans ce cas, on détecte si au moins une fréquence de vibration de la pompe est présente ou pas dans le signal fourni par l'accéléromètre.

De préférence, le boîtier de relais d'accessoires et ses accessoires sont agencés pour que les fréquences de vibration des différents accessoires soit toutes différentes de la fréquence de vibration de la pompe.

L'invention concerne encore un turboréacteur comportant au moins un arbre rotatif pouvant tourner à différentes vitesses, un circuit de carburant avec une pompe à carburant basse pression et une pompe à carburant haute pression entraînées par l'arbre rotatif par l'intermédiaire d'un boîtier de relais d'accessoires comprenant un engrenage d'entraînement mécanique desdits accessoires, et un dispositif de détection d'une défaillance de la pompe à carburant basse pression tel que celui présenté ci-dessus.

Le turboréacteur de l'invention présente les mêmes avantages que le dispositif présenté ci-dessus.

L'invention concerne également un procédé de détection d'une défaillance d'une pompe à carburant basse pression d'un turboréacteur comportant au moins un arbre rotatif pouvant tourner à différentes vitesses, ladite pompe étant entraînée par l'arbre rotatif par l'intermédiaire d'un boîtier de relais d'accessoires comprenant un engrenage d'entraînement mécanique desdits accessoires, procédé caractérisé par le fait que:
- on mesure la vitesse de rotation de l'arbre rotatif du turboréacteur,
- on mesure des fréquences de vibration du boîtier de relais d'accessoires et
- on détecte, parmi lesdites fréquences, au moins une fréquence de vibration normale de la pompe à la vitesse de rotation mesurée de l'arbre rotatif.

Le procédé de l'invention présente les mêmes avantages que le dispositif présenté ci-dessus. On comprend de la dernière étape du procédé que l'on cherche à détecter une telle fréquence de vibration normale; le résultat de cette détection peut être positif ou négatif, indiquant si la pompe BP fonctionne normalement ou pas.

Selon une forme de réalisation préférée, on mesure les fréquences de vibration du boîtier de relais d'accessoires avec un accéléromètre délivrant un signal représentatif des vibrations du boîtier de relais d'accessoires.

Selon une forme de réalisation préférée:
- on transforme le signal en provenance de l'accéléromètre en un signal dépendant de la phase de la rotation de la pompe à carburant basse pression,
- on fait la moyenne de ce signal transformé sur une pluralité de périodes de la pompe à carburant basse pression, qu'on ramène sur une période d'amplitude 2π,
- on calcule la densité spectrale de puissance de ce signal en fonction des ordres de vibration correspondant à des multiples de la fréquence de rotation de la pompe à carburant basse pression,
- on détermine si, à un ordre correspondant à la fréquence de vibration de la pompe à carburant basse pression, la densité spectrale présente une raie caractéristique de la présence d'une contribution de la pompe à carburant basse pression à cette fréquence et on en conclue si la pompe à carburant basse pression fonctionne normalement ou pas.

Selon une forme de réalisation préférée, la pompe comporte une roue entraînée en rotation à une certaine fréquence de rotation par l'engrenage du boîtier de relais d'accessoires et une fréquence principale de vibration de la pompe BP est un multiple de la fréquence de rotation de la roue.

L'invention sera mieux comprise à l'aide de la description suivante de la forme de réalisation préférée du dispositif et du procédé de détection de l'invention, en référence aux planches de dessins annexées, sur lesquelles:
- la figure 1 est un schéma de principe de l'engrenage du boîtier de relais d'accessoires du turboréacteur de l'invention;
- la figure 2 est une vue en coupe d'un boîtier comportant les pompes BP et HP monté sur le boîtier de relais d'accessoires de la figure 1;
- la figure 3 est un schéma bloc fonctionnel de l'AGB et du dispositif de détection d'une défaillance de la pompe BP du turboréacteur des figures 1 et 2;
- la figure 4 est un schéma bloc fonctionnel représentant certaines étapes de la forme de réalisation préférée du procédé de l'invention et
- les figures 5a et 5b sont des diagrammes représentant de la densité spectrale de puissance du signal fourni par l'accéléromètre du boîtier de relais d'accessoires des figures 1 à 3 en fonction des ordres de vibration correspondant aux multiples de la vitesse de rotation de la pompe BP.

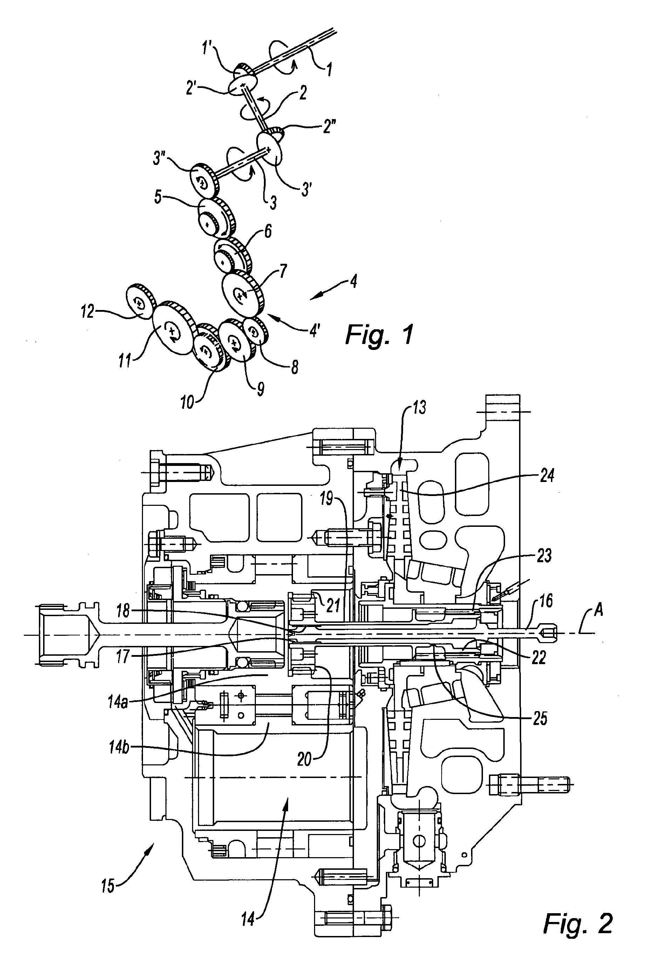

De manière bien connue de l'homme du métier, un turboréacteur selon l'invention comporte une soufflante, par laquelle l'air extérieur est aspiré dans le turboréacteur, un compresseur BP en amont d'un compresseur HP, agencés pour comprimer l'air et en sortie desquels l'air comprimé est guidé vers une chambre de combustion où il est brûlé avec du carburant également comprimé; les gaz brûlés sont guidés vers une turbine HP puis une turbine BP en sortie de laquelle ils s'échappent du turboréacteur par une tuyère d'échappement. Le compresseur BP est relié à la turbine BP par un arbre rotatif, formant ainsi un corps BP, tandis que le compresseur HP est relié à la turbine HP par un arbre rotatif, formant ainsi un corps HP. L'arbre du corps HP est représenté de manière schématique sur la figure 1 par l'arbre désigné par la référence 1.

De manière classique et bien connue de l'homme du métier, un arbre 2 dit de prise de mouvement est monté radialement dans le turboréacteur et comporte un premier pignon conique 2' qui engrène avec un pignon conique 1' de l'arbre 1 du corps HP, l'arbre de prise de mouvement 2 étant ainsi entraîné en rotation sur son axe par l'arbre 1 du corps HP. L'arbre de prise mouvement 2 comporte, à son extrémité opposée, un deuxième pignon conique 2" qui engrène avec un premier pignon 3' d'un arbre 3 d'entrée dans un boîtier de relais d'accessoires 4, cette arbre d'entrée 3 s'étendant perpendiculairement à l'arbre de prise de mouvement 2 et donc parallèlement à l'arbre 1 du corps HP. L'homme du métier désigne généralement un tel boîtier de relais d'accessoires 4 par son acronyme anglais AGB, qui signifie "Accessory Gear Box"; on le désignera de cette manière dans la suite de la description; l'AGB 4 est un dispositif bien connu dans le domaine des turboréacteurs.

L'AGB 4 entraîne en rotation différents accessoires participant au fonctionnement du turboréacteur, grâce à un engrenage 4' comprenant et entraîné par un second pignon 3" de son arbre d'entrée 3 (et donc entraîné indirectement par l'arbre 1 du corps HP par l'intermédiaire de l'arbre de prise de mouvement 2). Sur la figure 1 n'a été représenté schématiquement que l'engrenage 4' de l'AGB 4 et pas l'AGB 4 dans son ensemble, l'AGB 4 comportant également notamment un boîtier de logement de l'engrenage 4' et divers organes structurels, non représentés. Les accessoires entraînés par l'AGB 4 sont pour la plupart généralement fixés directement au boîtier de l'AGB 4.

Plus précisément, l'engrenage 4' comporte une pluralité de pignons 3", 5, 6, 7, 9, 11, 12 d'entraînement des accessoires, ces pignons d'entraînement 3", 5, 6, 7, 9, 11, 12 étant montés en série entre eux et avec deux pignons supplémentaires 8, 10 de liaison et d'adaptation des vitesses de rotation des différents pignons 5-14. Le second pignon 3" de l'arbre d'entrée 3 de l'AGB 4 est solidaire en rotation d'un arbre entraînant en rotation un alternateur à aimants permanents d'un régulateur du turboréacteur généralement désigné par son acronyme anglais FADEC (qui signifie "Full Authority Digital Engine Control"); les autres pignons d'entraînement 5, 6, 7, 9, 11, 12 sont respectivement solidaires en rotation des arbres d'entrée d'un dispositif d'entraînement manuel de l'AGB 4, d'un starter de turbine, d'une pompe à carburant BP 13 et d'une pompe à carburant HP 14, d'un générateur désigné par son acronyme anglais IDG (qui signifie "Integrated Drive Generator"), d'une pompe hydraulique et d'un module de lubrification qui sont, avec le FADEC, les accessoires entraînés par l'AGB 4.

En référence à la figure 2, la pompe à carburant BP 13 et la pompe à carburant HP 14 sont les pompes du circuit de carburant du turboréacteur; elles entraînent le carburant dans ce circuit pour l'alimentation en carburant de la chambre de combustion. Les pompes à carburant BP 13 et HP 14 sont contenues dans un boîtier commun 15. Un arbre 16 d'entrée dans le boîtier 15, d'axe A et solidaire en rotation du pignon 7 d'entraînement des pompes 13, 14 de l'engrenage 4' de l'AGB 4, permet l'entraînement des pompes BP 13 et HP 14 par cet engrenage 4'. Cet arbre 16 comporte, à son extrémité opposée à son extrémité entraînée par l'engrenage 4', une portion 17 d'accouplement à cannelures longitudinales périphériques, agencée pour coopérer avec une portion complémentaire 18 d'accouplement à cannelures d'une extrémité d'un arbre tubulaire 19 d'entraînement des pompes 13, 14, cet arbre tubulaire 19 s'étendant autour de l'arbre d'entrée 16, co-axialement à lui. Les portions d'accouplement 17, 18 comprennent chacune des cannelures longitudinales réparties uniformément angulairement autour de l'axe A des arbres 16, 19, ces cannelures étant parallèles entre elles et à l'axe A; les cannelures de l'arbre d'entrée 16 sont ménagées sur sa surface externe et les cannelures de l'arbre tubulaire 19 sont ménagées sur sa surface interne. Les portions d'accouplement 17, 18 permettent ainsi d'obtenir un accouplement en rotation des deux arbres 16, 19 autour de leur axe commun A.

L'arbre tubulaire 19 comporte, à son extrémité comportant les cannelures internes de sa portion d'accouplement 18, des cannelures externes 20 d'entraînement de la pompe HP 14, agencées pour engrener avec des cannelures 21 du mécanisme de la pompe HP 14, de manière classique dans le domaine des pompes mécaniques. Il n'est pas nécessaire de détailler ici la structure et le fonctionnement des éléments de la pompe HP 14, qui sont bien connus de l'homme du métier. La pompe HP 14 peut d'ailleurs être conforme à l'un quelconque des modèles existants de pompes HP. En l'espèce, la pompe HP 14 est une pompe dite "à engrenage" qui comporte un pignon (ou roue) menant(e) 14a, entraîné par l'arbre tubulaire 19, le pignon menant 14a entraînant un pignon (ou roue) mené(e) 14b; le carburant est comprimé dans un volume entre les dents engrenées des pignons menant 14a et mené 14b, de manière bien connue de l'homme du métier.

L'arbre tubulaire 19 comporte, à son extrémité opposée, des cannelures externes 22 d'entraînement de la pompe BP 13, agencées pour engrener avec des cannelures 23 du mécanisme d'entraînement de la pompe BP 13, de manière classique dans le domaine des pompes mécaniques. La pompe BP 13 est en l'espèce une pompe dite "à rouet" qui comporte une roue (ou rouet) 24 entraînée en rotation par l'arbre tubulaire 19 notamment via les cannelures 22, 23. En fonctionnement, du carburant est injectée du côté interne de la roue 24, la roue 24 étant munie d'une pluralité d'aubes, en l'occurrence au nombre de sept, agencées pour entraîner le carburant par effet centrifuge depuis le côté interne de la roue 24 vers son côté externe et ainsi le comprimer; il n'est pas nécessaire de décrire plus précisément sa structure car elle est bien connue de l'homme du métier; d'ailleurs, tout type de pompe BP 13 peut être utilisé. Le carburant est collecté du côté externe de la roue 24 et guidé vers la pompe HP 14 qui le comprime à nouveau, de manière connue qu'il n'est pas nécessaire de détailler ici.

L'arbre tubulaire 19 d'entraînement des pompes BP 13 et HP 14 comporte par ailleurs une portion fusible 25 située à proximité de ses cannelures 22 d'entraînement de la pompe BP 13. Cette portion fusible 25 est agencée pour casser en cas de balourd ou contraintes trop importantes sur la pompe BP 13. Ainsi, en cas de dysfonctionnement de la pompe BP 13 (par exemple en raison de l'ingestion d'un corps étranger), la portion fusible 25 casse, ce qui découple les cannelures 23 du mécanisme d'entraînement de la pompe BP 13 - et donc sa roue 24 - de l'arbre tubulaire d'entraînement 19. Dans ce cas, la roue 24 est en roue libre et ne comprime plus le carburant aspiré par les pompes BP 13 et HP 14. La pompe HP 14 est alors alimentée en carburant non comprimé et risque de "caviter" (c'est-à-dire d'aspirer de l'air), ce qui peut conduire, si ce fonctionnement anormal avec cavitation se prolonge, à de fortes détériorations de la pompe HP 14, pouvant aller jusqu'à un arrêt de l'alimentation de la chambre de combustion en carburant comprimé et donc à un arrêt en plein vol du turboréacteur. C'est pour être prévenu d'une défaillance de la pompe BP dès sa survenance, afin de pouvoir anticiper les actions à prendre, que le turboréacteur comporte un dispositif 26 de détection de défaillance de la pompe BP 13.

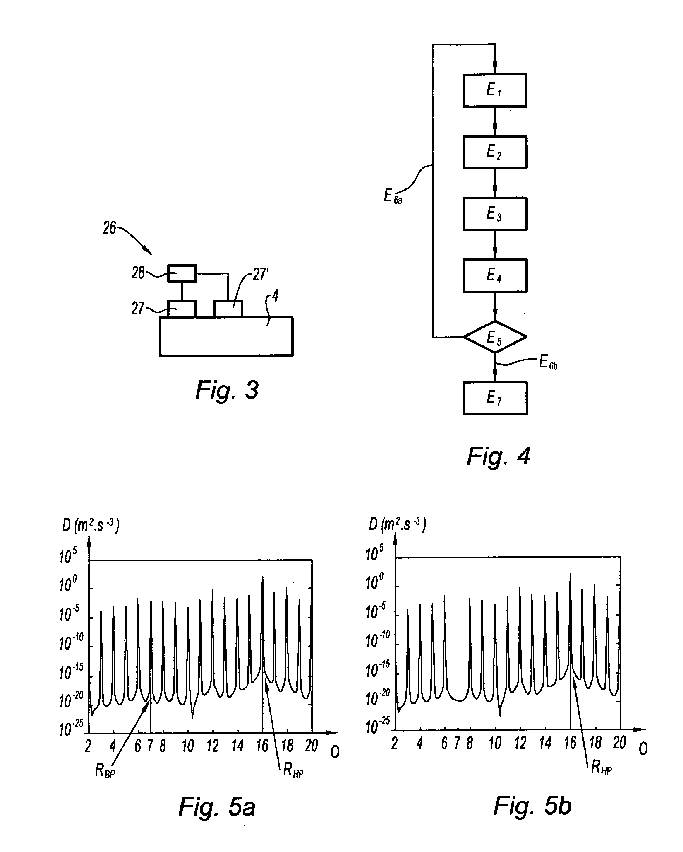

En référence à la figure 3, ce dispositif 26 comporte des moyens 27' de mesure du régime du turboréacteur (c'est-à-dire de la vitesse de rotation de l'arbre 1 de son corps HP), des moyens 27 de mesure des fréquences de vibration de l'AGB 4 et des moyens 28 de détection, parmi ces fréquences, d'au moins une fréquence de vibration normale de la pompe BP 13 au régime mesuré du turboréacteur (on note qu'on peut mesurer la fréquence principale de vibration de la pompe BP 13 et/ou ses harmoniques). Les fréquences de vibrations de l'AGB 4 comprennent les fréquences de vibration de l'AGB 4 en tant que tel mais aussi les fréquences de vibration des accessoires qu'il entraîne, puisque ces derniers sont solidaires en rotation de l'engrenage 4' de l'AGB 4 qui entraîne en rotation leurs arbres d'entraînement respectifs.

Grâce au dispositif 26, il est ainsi possible de détecter la présence ou non, parmi les fréquences de vibration de l'AGB 13, d'au moins une fréquence de vibration normale de la pompe BP 13 au régime du turboréacteur, en l'espèce de sa fréquence principale de vibration. Ainsi:
- si la fréquence de vibration de la pompe BP 13 est présente dans les fréquences mesurées de vibration de l'AGB 13, on peut en déduire que la pompe BP 13 est effectivement entraînée en rotation à sa fréquence de fonctionnement normal, c'est-à-dire que les moyens fusibles 25 n'ayant pas cassé;
- si la fréquence de vibration de la pompe BP 13 est absente des fréquences mesurées de vibration de l'AGB 13, on peut en déduire que la pompe BP 13 n'est plus entraînée en rotation à sa fréquence de fonctionnement normal, c'est-à-dire que les moyens fusibles 25 ont cassé et que la roue de la pompe BP 13 n'est pas entraînée en rotation par l'AGB 4.

Lorsqu'on a connaissance du caractère défaillant du fonctionnement de la pompe BP 13, il est possible de prendre toute mesure appropriée afin que la pompe HP 14 ne fonctionne pas (trop longtemps) en régime de cavitation, pour éviter que la pompe HP 14 ne se détériore et que l'alimentation de la chambre en carburant comprimé finisse par être arrêtée; on peut donc prendre toutes mesures permettant d'éviter ou du moins d'anticiper un arrêt en plein vol du turboréacteur.

En l'espèce, l'AGB 4 est conçu de telle sorte qu'il n'y a pas sur l'AGB 4 d'autres éléments ou accessoires générant une composante de vibration de même fréquence que celle de la pompe BP 13; une telle configuration de l'AGB 4 est très utile ici puisqu'elle permet de garantir que la disparition de la fréquence de vibration normale de la pompe BP 13 dans le signal mesuré par les moyens de mesure 27 est nécessairement liée à un dysfonctionnement de cette pompe BP 13. Or, il se trouve que ce type de configuration de l'AGB 4 (tous les éléments vibrant à des fréquences différentes) est répandu dans les turboréacteurs connus, pour éviter d'éventuels phénomènes de résonance entre les éléments entraînés par l'AGB 4; l'invention a donc le mérite d'utiliser une caractéristique répandue à d'autres fins et d'en tirer un avantage.

La fréquence de vibration générée par la rotation de la pompe BP 13 à un régime donné du turboréacteur peut aisément être déterminée à partir de la vitesse de rotation v_{BP} de la roue 24 de la pompe BP 13. Cette vitesse de rotation v_{BP} est un multiple de la vitesse de rotation N_{HP} de l'arbre 1 du corps HP, c'est-à-dire que v_{BP}=k.N_{HP}, avec k un coefficient fixé (la vitesse de rotation N_{HP} de l'arbre 1 du corps HP correspond, comme on l'a vu, au régime du turboréacteur); le coefficient k est fixé par la chaîne cinématique qui relie l'arbre 1 du corps HP à la pompe BP 13; ainsi, connaissant les rapports d'engrenage de toutes les paires de pignons engrenant les uns avec les autres depuis l'arbre 1 du corps HP du turboréacteur jusqu'à la pompe BP 13, on connait la valeur du coefficient k, qui a une valeur fixe indépendante du régime moteur.

En l'espèce, les moyens 27' de mesure du régime du turboréacteur comportent un capteur 27' monté sur l'AGB 4 et mesurant la vitesse de rotation d'un arbre de l'AGB 4 tournant à la même vitesse que l'arbre 1 du corps HP du turboréacteur, de manière connu.

En l'espèce, les moyens 27 de mesure des fréquences de vibration de l'AGB 4 comprennent un accéléromètre 27. Un tel accéléromètre 27 est agencé pour délivrer un signal électrique représentant les vibrations auxquelles est soumis l'AGB 4; les composantes fréquentielles de ce signal correspondent aux différentes fréquences de vibration auxquelles est soumis l'AGB 4, ces fréquences de vibration étant pour la plupart directement reliées aux fréquences de rotation des accessoires entraînés par l'AGB 4.

Les moyens 28 de détection de la fréquence de vibration de la pompe BP 13 comprennent en l'espèce une unité de traitement 28 comportant ici un microprocesseur, de préférence un microprocesseur du type DSP qui est l'acronyme anglais de "Digital Signal Processor", optimisé pour le traitement des signaux fréquentiels. Les moyens 27' de mesure du régime du turboréacteur (capteur 27') et les moyens 27 de mesure des fréquences de vibration de l'AGB 4 (accéléromètre 27) sont reliés à l'unité de traitement 28 pour lui délivrer le signal qu'ils mesurent, ces signaux étant traités par l'unité de traitement 28.

On peut noter ici que la présence d'un accéléromètre sur un AGB était connue dans l'art antérieur, à des fins différentes. Classiquement, un accéléromètre est prévu sur un AGB pour suivre le comportement des roulements de son engrenage; à cet effet, on définit des "pointeurs", qui sont des indicateurs calculés sur le signal et, en fonction de l'évolution de ces indicateurs, on détermine si les roulements se sont dégradés; en particulier, on analyse l'historique du signal que mesure l'accéléromètre et plus précisément la dispersion de son évolution. Une telle utilisation d'un accéléromètre est complexe tandis que l'utilisation qui est faite de l'accéléromètre 27 pour la détection d'une défaillance sur la pompe BP 13 est simple: soit la contribution fréquentiel de l'AGB 4 est présente, soit elle ne l'est pas. Ainsi, le dispositif et le procédé de détection d'une défaillance de la pompe BP 13 sont remarquables par la simplicité de l'analyse impliquée.

De préférence, l'accéléromètre 27 utilisé pour la détection de défaillances sur la pompe BP 13 est le même que celui utilisé pour le suivi du comportement des roulements de l'engrenage 4' de l'AGB 4. L'unité de traitement 28 utilisée pour la détection de défaillances sur la pompe BP 13 peut également être la même que celle utilisée pour le suivi du comportement des roulements de l'engrenage 4', programmée de manière ad hoc. On utilise ainsi des dispositifs connus dans un turboréacteur pour leur permettre de remplir une fonction nouvelle.

Le procédé de détection d'une défaillance de la pompe BP 13 va maintenant être décrit plus en détails, en référence à la figure 4, selon un exemple possible de détection de la présence ou de l'absence d'une contribution de la pompe BP 13 à une fréquence de vibration correspondant à son fonctionnement normal à un régime donné du turboréacteur. Bien entendu, tout autre procédé adapté peut être utilisé.

Au cours d'une première étape E₁, le turboréacteur fonctionnant à un certain régime N_{HP}, on mesure ce régime N_{HP} grâce au capteur 27' et on détermine la fréquence de vibration normale de la pompe BP 13 au régime N_{HP} du turboréacteur; autrement dit, on déduit de la vitesse mesurée N_{HP} de rotation de l'arbre 1 du corps HP la fréquence à laquelle doit vibrer la pompe BP 13 si elle fonctionne normalement, dans le but de vérifier au cours des étapes subséquentes si on retrouve bien cette fréquence de vibration normale dans le signal mesuré par l'accéléromètre 27. Comme on l'a vu plus haut, cette fréquence de vibration normale de la pompe BP 13 dépend de la vitesse de rotation de la roue 24 de la pompe BP 13 qui elle-même dépend directement du régime mesuré du turboréacteur selon la formule: v_{BP}=k.N_{HP} avec k fixé. Ainsi, à chaque régime mesuré N_{HP} du turboréacteur, on connaît la vitesse de rotation v_{BP} à laquelle doit tourner la pompe BP 13 si elle fonctionne normalement. En fonction de la structure de la pompe BP 13, on peut alors déterminer sa fréquence principale de vibration; en l'espèce, la roue 24 de la pompe BP 13 comportant 7 aubes, la fréquence principale de vibration fᵥ de la pompe BP 13 est égale à 7 fois sa fréquence (vitesse) de rotation (la fréquence de passage des aubes étant égale à 7 fois la fréquence de rotation de la roue 24 puisqu'il y a 7 aubes), c'est-à-dire fᵥ=7.v_{BP}=7.k.N_{HP}.

Au cours d'une deuxième étape E₂, on transforme le signal en provenance de l'accéléromètre, qui est un signal du type γ=f(t) (signal γ dépendant du temps t), en un signal du type γ=f(ϕ) dépendant de la phase ϕ de la rotation de la pompe BP 13.

Au cours d'une troisième étape E₃, on fait la moyenne de ce signal transformé sur une pluralité de périodes (ou tours) de la pompe BP 13, qu'on ramène sur une période d'amplitude 2π.

A l'issue des étapes E₂ et E₃, on obtient un signal dit "rééchantillonné"(le premier échantillonnage ayant été effectué au moment de la mesure) et moyenné.

Au cours d'une quatrième étape E₄, on calcule la densité spectrale de puissance D du signal (en m².sec⁻³, homogène à une accélération au carré divisée par des Hertz) en fonction des ordres de vibration O (les ordres de vibration étant les multiples de la vitesse de rotation v_{BP} de la pompe BP 13).

Au cours d'une cinquième étape E₅, on détermine alors si, à l'ordre correspondant à la fréquence principale de vibration de la pompe BP 13, la densité spectrale présente une raie caractéristique de la présence d'une contribution à cette fréquence ou s'il n'y a pas de raie. En fonction de cette information, on en conclue si la pompe BP 13 fonctionne correctement ou non et on définit la suite à donner au procédé de détection. Ainsi:
- s'il y a une raie, cela signifie que le signal vibratoire de l'AGB 4 comporte une contribution à la fréquence de vibration de la pompe BP 13 en fonctionnement normal au régime moteur considéré; la pompe BP 13 étant le seul élément de l'AGB 4 (ou fixé à elle) générant une vibration à cette fréquence, on peut en déduire de manière certaine que c'est bien la pompe BP 13 qui est à l'origine de cette contribution fréquentielle et donc qu'elle fonctionne correctement; le procédé est alors de nouveau mis en oeuvre (flèche E₆ₐ) pour assurer un suivi en continu du fonctionnement de la pompe BP 13;
- s'il n'y a pas de raie, cela signifie que la pompe BP 13 ne génère pas la vibration qu'elle devrait générer, c'est-à-dire qu'elle ne tourne pas à la vitesse à laquelle elle devrait tourner au régime considéré du turboréacteur et qu'il y a donc une défaillance; on passe alors (flèche E6b) à une étape E7 de décision en réaction à ce dysfonctionnement; des mesures peuvent être prises rapidement puisque la défaillance est détectée dès sa survenance.

On a représenté sur les figures 5a et 5b la densité spectrale de puissance D du signal moyenné de l'accéléromètre 27 en fonction des ordres de vibration O, dans un cas de fonctionnement normal de la pompe BP 13 (figure 5a) et dans un cas de dysfonctionnement de la pompe BP 13 (figure 5b).

Dans l'exemple décrit, en fonctionnement normal de la pompe BP 13, on note sur la figure 5a que le signal de l'accéléromètre 27 présente une raie R_{BP} à l'ordre 7, correspondant à la contribution de la pompe BP 13 au signal, et une raie R_{HP} à l'ordre 16, correspondant à la contribution de la pompe HP 14 au signal. On connaît les ordres O correspondant aux raies des pompes BP 13 et HP 14 en fonction de la structure de ces dernières et des différents rapports d'engrenages impliqués; ainsi, en l'espèce, comme expliqué plus haut, la raie principale de la pompe BP 13 est à l'ordre 7 car la roue 24 de la pompe BP 13 comporte 7 aubes et que les ordres sont des multiples de la vitesse de rotation de la pompe BP 13.

En fonctionnement anormal de la pompe BP 13, on note sur la figure 5b que la raie R_{BP} a disparu, seule la raie R_{HP} de la pompe HP 14 apparaissant encore; l'amplitude résiduelle de la densité spectrale de puissance au niveau de l'ordre de vibration 7 correspond au bruit sur le signal.

L'ensemble des étapes présentées ci-dessus peuvent être mises en oeuvre par l'unité de traitement 28. On peut bien entendu affiner l'analyse en détectant non seulement la raie principale (fréquence principale de vibration de la pompe BP 13) mais aussi ses harmoniques, ce qui offre une plus grande robustesse de l'algorithme au bruit sur le signal (l'énergie (et donc la part du signal) correspondant aux vibrations de la pompe BP étant faible comparée à l'énergie (et donc la part du signal) correspondant au turboréacteur lui-même).

L'accéléromètre 27 peut être uni ou pluridirectionnel. On mesure a priori l'accélération sur l'AGB 4 dans une seule direction qui est la direction perpendiculaire à la direction des arbres des accessoires entraînés par l'AGB 4 (parallèles entre eux et à l'arbre 1 du corps HP du turboréacteur); cela n'interdit pas néanmoins l'utilisation d'un accéléromètre pluridirectionnel. La bande passante de l'accéléromètre 27 est de préférence de l'ordre de 20kHz.

De préférence, pour détecter la présence ou non d'une raie dans la densité spectrale de puissance (qui peut comporter plus de bruit que sur les figures 5a et 5b), on peut prévoir la mesure de signaux sur des AGB étalons ou témoins et on comparer le signal mesuré aux signaux de référence pour en déduire si la raie recherchée est présente ou pas.

## Revendications

1. Turboréacteur avec au moins un arbre rotatif (1) pouvant tourner à différentes vitesses, un boîtier de relais d'accessoires (4) comprenant un engrenage (4') d'entraînement mécanique desdits accessoires, une pompe à carburant basse pression (13) entraînée par l'arbre rotatif (1) par l'intermédiaire du boîtier de relais d'accessoires (4) et un dispositif de détection d'une défaillance de la pompe à carburant **caractérisé par le fait que** ledit dispositif de détection d'une défaillance comporte des moyens (27') de mesure de la vitesse de rotation (N_{HP}) de l'arbre rotatif (1) du turboréacteur, des moyens (27) de mesure de fréquences de vibration du boîtier de relais d'accessoires (4) et des moyens (28) de détection, parmi lesdites fréquences, d'au moins une fréquence de vibration normale de la pompe à carburant basse pression (13) à la vitesse de rotation mesurée de l'arbre rotatif (1).

2. Turboréacteur selon la revendication 1, dit à double corps comportant un corps basse pression et un corps haute pression, dont ledit arbre rotatif (1) est l'arbre du corps haute pression du turboréacteur.

3. Turboréacteur selon l'une des revendications 1 ou 2, dans lequel les moyens (27) de mesure de fréquences de vibration du boîtier de relais d'accessoires (4) comprennent un accéléromètre (27) délivrant un signal représentatif des vibrations du boîtier de relais d'accessoires (4).

4. Turboréacteur selon l'une des revendications 1 à 3, dans lequel le boîtier de relais d'accessoires (4) et ses accessoires sont agencés pour que les fréquences de vibration des différents accessoires soit toutes différentes de la fréquence de vibration de la pompe à carburant basse pression (13).

5. Turboréacteur selon l'une des revendications 1 à 4 dont le circuit de carburant comporte en outre une pompe à carburant haute pression (14) entraînée par l'arbre rotatif (1) par l'intermédiaire du boîtier de relais d'accessoires (4).

6. Procédé de détection d'une défaillance d'une pompe à carburant basse pression (13) d'un turboréacteur comportant au moins un arbre rotatif pouvant tourner à différentes vitesses, ladite pompe (13) étant entraînée l'arbre rotatif par l'intermédiaire d'un boîtier de relais d'accessoires (4) comprenant un engrenage (4') d'entraînement mécanique desdits accessoires, procédé **caractérisé par le fait que**:
- on mesure la vitesse de rotation (N_{HP}) de l'arbre rotatif (1) du turboréacteur,
- on mesure des fréquences de vibration du boîtier de relais d'accessoires et
- on détecte, parmi lesdites fréquences, au moins une fréquence de vibration normale de la pompe à carburant basse pression (13) à la vitesse de rotation (N_{HP}) mesurée de l'arbre rotatif (1).

7. Procédé selon la revendication 6, dans lequel on mesure les fréquences de vibration du boîtier de relais d'accessoires (4) avec un accéléromètre (27) délivrant un signal représentatif des vibrations du boîtier de relais d'accessoires (4).

8. Procédé selon la revendication 7, dans lequel:
- on transforme le signal en provenance de l'accéléromètre (27) en un signal dépendant de la phase de la rotation de la pompe à carburant basse pression (13),
- on fait la moyenne de ce signal transformé sur une pluralité de périodes de la pompe à carburant basse pression (13), qu'on ramène sur une période d'amplitude 2π,
- on calcule la densité spectrale de puissance de ce signal en fonction des ordres de vibration correspondant à des multiples de la fréquence de rotation de la pompe à carburant basse pression (13),
- on détermine si, à un ordre correspondant à la fréquence de vibration de la pompe à carburant basse pression (13), la densité spectrale présente une raie (R_{BP}) caractéristique de la présence d'une contribution de la pompe à carburant basse pression (13) à cette fréquence et on en conclue si la pompe à carburant basse pression fonctionne normalement ou pas.

9. Procédé selon la revendication 8, dans lequel la pompe à carburant basse pression (13) comporte une roue (24) entraînée en rotation à une certaine fréquence de rotation par l'engrenage (4') du boîtier de relais d'accessoires (4) et une fréquence principale de vibration de la pompe à carburant basse pression (13) est un multiple de la fréquence de rotation de la roue (24).

## Patentansprüche

1. Strahltriebwerk mit mindestens einer Drehwelle (1), die sich mit unterschiedlichen Geschwindigkeiten drehen kann, einem Zubehörteil-Relaisgehäuse (4), das ein Getriebe (4') zum mechanischen Antreiben der Zubehörteile umfasst, einer Niederdruck-Treibstoffpumpe (13), die durch die Drehwelle (1) mit Hilfe des Zubehörteil-Relaisgehäuses (4) angetrieben wird, und einer Vorrichtung zur Detektion eines Ausfalls der Treibstoffpumpe, **dadurch gekennzeichnet, dass** die Vorrichtung zur Detektion eines Ausfalls der Treibstoffpumpe Folgendes aufweist: Mittel (27') zur Messung der Drehzahl (N_{HP}) der Drehwelle (1) des Strahltriebwerks, Mittel (27) zur Messung der Vibrationsfrequenzen des Zubehörteil-Relaisgehäuses (4) und Mittel (28) zur Detektion mindestens einer normalen Vibrationsfrequenz der Niederdruck-Treibstoffpumpe (13) unter diesen Frequenzen bei der gemessenen Drehzahl der Drehwelle (1).

2. Strahltriebwerk nach Anspruch 1, so genanntes Doppelkörper-Strahltriebwerk, das einen Niederdruckkörper und einen Hochdruckkörper aufweist, wobei die Drehwelle (1) die Welle des Hochdruckkörpers des Strahltriebwerks ist.

3. Strahltriebwerk nach einem der Ansprüche 1 oder 2, wobei die Mittel (27) zur Messung der Vibrationsfrequenzen des Zubehörteil-Relaisgehäuses (4) einen Beschleunigungssensor (27) umfassen, der ein Signal bereitstellt, das für die Vibrationen des Zubehörteil-Relaisgehäuses (4) repräsentativ ist.

4. Strahltriebwerk nach einem der Ansprüche 1 bis 3, wobei das Zubehörteil-Relaisgehäuse (4) und dessen Zubehörteile so gestaltet sind, damit die Vibrationsfrequenzen der verschiedenen Zubehörteile sich allesamt von der Vibrationsfrequenz der Niederdruck-Treibstoffpumpe (13) unterscheiden.

5. Strahltriebwerk nach einem der Ansprüche 1 bis 4, wobei der Treibstoffkreislauf ferner eine Hochdruck-Treibstoffpumpe (14) aufweist, die durch die Drehwelle (1) mit Hilfe des Zubehörteil-Relaisgehäuses (4) angetrieben wird.

6. Verfahren zur Detektion eines Ausfalls einer Niederdruck-Treibstoffpumpe (13) eines Strahltriebwerks mit mindestens einer Drehwelle, die sich mit unterschiedlichen Geschwindigkeiten drehen kann, wobei die Pumpe (13) durch die Drehwelle mit Hilfe eines Zubehörteil-Relaisgehäuses (4) angetrieben wird, das ein Getriebe (4') zum mechanischen Antreiben der Zubehörteile umfasst, wobei das Verfahren **dadurch gekennzeichnet ist, dass**:
- die Drehzahl (N_{HP}) der Drehwelle (1) des Strahltriebwerks gemessen wird,
- Vibrationsfrequenzen des Zubehörteil-Relaisgehäuses (4) gemessen werden und
- unter diesen Frequenzen mindestens eine normale Vibrationsfrequenz der Niederdruck-Treibstoffpumpe (13) bei der gemessenen Drehzahl (N_{HP}) der Drehwelle (1) gemessen wird.

7. Verfahren nach Anspruch 6, bei dem die Vibrationsfrequenzen des Zubehörteil-Relaisgehäuses (4) mit einem Beschleunigungssensor (27) gemessen werden, der ein Signal bereitstellt, das für die Vibrationen des Zubehörteil-Relaisgehäuses (4) repräsentativ ist.

8. Verfahren nach Anspruch 7, bei dem:
- das von dem Beschleunigungssensor (27) stammende Signal in ein Signal umgewandelt wird, das von der Phase der Drehung der Niederdruck-Treibstoffpumpe (13) abhängt,
- der Mittelwert dieses umgewandelten Signals über eine Vielzahl von Perioden der Niederdruck-Treibstoffpumpe (13) gebildet wird, die auf eine Periode der Amplitude 2π gebracht wird,
- die spektrale Leistungsdichte dieses Signals in Abhängigkeit der Vibrationsstärken berechnet wird, die Vielfachen der Rotationsfrequenz der Niederdruck-Treibstoffpumpe (13) entsprechen,
- bestimmt wird, ob bei einer Stärke, die der Rotationsfrequenz der Niederdruck-Treibstoffpumpe (13) entspricht, die spektrale Leistungsdichte eine Linie (R_{BP}) aufweist, die für das Vorhandensein eines Beitrags der Niederdruck-Treibstoffpumpe (13) zu dieser Frequenz charakteristisch ist, und daraus geschlossen wird, ob die Niederdruck-Treibstoffpumpe normal läuft oder nicht.

9. Verfahren nach Anspruch 8, bei dem die Niederdruck-Treibstoffpumpe (13) ein Rad (24) aufweist, das durch das Getriebe (4') des Zubehörteil-Relaisgehäuses (4) zur Drehung mit einer bestimmten Rotationsfrequenz angetrieben wird, und eine Hauptvibrationsfrequenz der Niederdruck-Treibstoffpumpe (13) ein Vielfaches der Rotationsfrequenz des Rads (24) ist.

## Claims

1. A Jet engine comprising at least one rotary shaft (1) that can rotate at different speeds, an accessory relay box (4) comprising a gear system (4') for mechanically driving said accessories, a low-pressure fuel pump (13) driven by said rotary shaft (1) via said accessory relay box (4) and a device for detecting a failure of the fuel pump (13) **characterized in that** said device for detecting a failure includes means (27') for measuring the speed of rotation (N_{HP}) of the rotary shaft (1) of the jet engine, means (27) for measuring vibration frequencies of the accessory relay box (4) and means (28) for detecting, out of said frequencies, at least one normal vibration frequency of the low-pressure fuel pump (13) at the measured rotation speed of the rotary shaft (1).

2. A Jet engine according to Claim 1, being a so-called dual-body jet engine comprising a low-pressure body and a high-pressure body, whose rotary shaft (1) is the shaft of the high-pressure body of the jet engine.

3. A Jet engine according to one of Claims 1 or 2, in which the means (27) for measuring vibration frequencies of the accessory relay box (4) comprise an accelerometer (27) delivering a signal representative of the vibrations of the accessory relay box (4).

4. A Jet engine according to one of Claims 1 to 3, in which the accessory relay box (4) and its accessories are arranged so that the vibration frequencies of the different accessories are all different from the vibration frequency of the low-pressure fuel pump (13).

5. A Jet engine according to one of claims 1 to 4, in which said fuel circuit further comprises a high-pressure fuel pump (14) driven by the rotary shaft (1) via said accessory relay box (4)

6. Method for detecting a failure of a low-pressure fuel pump (13) of a jet engine comprising at least one rotary shaft that can rotate at different speeds, said pump (13) being driven by the rotary shaft via an accessory relay box (4) comprising a gear system (4') for mechanically driving said accessories, the method being **characterized in that**:
- the rotation speed (N_{HP}) of the rotary shaft (1) of the jet engine is measured,
- the vibration frequencies of the accessory relay box are measured, and
- out of said frequencies, at least one normal vibration frequency of the low-pressure fuel pump (13) at the measured rotation speed (N_{HP}) of the rotary shaft (1) is detected.

7. Method according to Claim 6, in which the vibration frequencies of the accessory relay box (4) are measured with an accelerometer (27) delivering a signal representative of the vibrations of the accessory relay box (4).

8. Method according to Claim 7, in which:
- the signal from the accelerometer (27) is converted into a signal dependent on the phase of the rotation of the low-pressure fuel pump (13),
- the average of this converted signal is calculated over a plurality of periods of the low-pressure fuel pump (13), reduced to a period of amplitude 2π,
- the power spectral density of this signal is calculated according to the orders of vibration corresponding to multiples of the rotation frequency of the low-pressure fuel pump (13),
- determination is made as to whether, at an order corresponding to the vibration frequency of the low-pressure fuel pump (13), the spectral density exhibits a ray (R_{BP}) characteristic of the presence of a contribution of the low-pressure fuel pump (13) to this frequency and a conclusion is drawn therefrom as to whether the low-pressure fuel pump is operating normally or not.

9. Method according to Claim 8, in which the low-pressure fuel pump (13) comprises a wheel (24) driven in rotation at a certain rotation frequency by the gear system (4') of the accessory relay box (4) and a main vibration frequency of the low-pressure fuel pump (13) is a multiple of the rotation frequency of the wheel (24).
